# EUROPEAN PATENT APPLICATION

(11) **EP 4 742 092 A1**
(43) Date of publication of application: **13.05.2026**
(21) Application number: 24306892.1
(22) Date of filing: 12.11.2024
(51) Int. Cl.: G06K 19/07

(54) **TRACKING DEVICE FOR SATELLITE COMMUNICATION**

(71) Applicant: Linxens Holding, 78200 Mantes-la-Jolie (FR)
(72) Inventor: RANC, Emmanuel, Mantes la Jolie (FR)
(74) Representative: Grünecker Patent- und Rechtsanwälte PartG mbB

(57) **Abstract**

The present invention relates to a tracking device for satellite communication comprising a flexible Printed Circuit Board (PCB) configured to communicate with a satellite, and a power control module configured to supply power to the flexible PCB. The flexible PCB comprises a microcontroller, a communication module, a satellite antenna, and an RFID antenna. The power control module comprises an energy-storage module and an energy-harvesting module, wherein the energy-harvesting module is configured to generate energy and provide it to the energy-storage module.

## Description

### Technical field

The present invention relates to the field of tracking devices for satellite communication. In particular, the present invention relates to the field of energetically autonomous tracking devices for satellite communication.

### State of the art

Satellite devices are used to send and receive signals via satellites orbiting the Earth. These devices enable long-distance communication by transmitting data to satellites, which then relay the signals back to other satellite devices, ground stations, or even directly to other user devices in remote areas. These devices are commonly used as trackers for tracking, monitoring, and locating objects by using GPS and simplex satellite devices.

However, the signal coverage and the precision of the satellite devices known at the state of the art are not optimal, and their design is not adapted to the usage.

### Summary

According to an aspect of the present invention, a tracking device for satellite communication is provided, as set out in claim 1.

The advantage of this configuration is that it enables tracking a position of an object, such as a package or a container, around the world by using satellite communication. The device also enables collecting sensitive external environment data and inventorying a number of objects in a predefined area. Moreover, the device for satellite communication is completely autonomous regarding energy-harvesting because it relies on solar energy, without the need of external batteries, such as lithium batteries. Finally, the device is re-usable.

The device according to the invention comprises a flexible Printed Circuit Board (PCB) and a power control module configured to supply energy to the flexible PCB.

The PCB is configured to communicate with a pre-existing satellite constellation. Preferably, the pre-existing satellite constellation is a geostationary constellation. The satellite constellation may then transmit a communication signal to the internet cloud and send it to local applications areas to display the position of the device and also parameters of travel.

The PCB comprises a microcontroller, a communication module, a satellite antenna, and an RFID antenna, which may be produced according to technologies known at the state of the art. Preferably, the microcontroller and/or the communication module are low power consumption components, for example, the power is equal to or less than 30mA in Serial Line Internet Protocol (SLIP) mode, more preferably equal to or less than 25 mA in SLIP mode, even more preferably equal to or less than 20 mA in SLIP mode. Preferably, the microcontroller and/or the communication module are low power consumption components, for example, the power is equal to or less than 350 mA in Programmable Interface Controller (PIC) mode. Due to optimization of power consumption in the power control module, the features of the microcontroller and/or the communication module can be optimized.

Preferably, the communication module may rely on existing network adapted to satellites and may be based on Long-Range communication technology. In this way, the communication module can send messages with short intervals, for example under 15 minutes, to transfer data from the device to the satellite. It is hence possible to ensure a duration life of the device of more than three months.

The power control module is based on solar panels technology and/or mechanical-vibration sensors and is configured to capture and use energy. In other words, the power control module is configured to exploit the solar energy and/or the mechanical energy generated by movement or vibration to power the PCB components, such as small electronics or sensors, autonomously. Since the PCB components are low-power consumption components, the tracking device has a long lifetime and is energetically autonomous. For example, the mechanical-vibration sensors may be piezo-electric sensors, accelerometers and/or gyroscopes.

In the present disclosure, it is to be understood that vibration technology refers to any technology that converts vibrational and/or mechanical energy into electrical energy.

The power control module comprises at least one of the following combination of components: a battery and an energy-harvesting module; a battery and a solar panel; and/or a harvesting module and a storage capacitor.

Preferably, the tracking device is configured as a layered-structure, wherein the layers of the power control module and of the flexible PCB are stacked on each other. Preferably, the tracking device may further comprise an adhesive layer, a cover layer, and/or compensation layers attached to the stacked structure of the flexible PCB and the power control module.

Preferably, the tracking device is flexible, for instance it may be configured to be bent up to 60°.

Preferably, the device has a thickness of less than 20 mm, preferably less than 10 mm, even more preferably equal to or less than 5 mm. This configuration is advantageous because the device is thin and can be easily applied on an object to be tracked

Preferably, the device has standard dimensions, for example 10x15 cm.

Preferably, the device comprises an external adhesive layer and can be used as a sticker. The advantage of this configuration is that the device can be re-used in different situations, thus reducing the disposal of components and minimizing impact on the environment. The user can, in fact, remove the device from an object by detaching the adhesive layer and can keep and reuse the device for tracking a new object.

Preferably, the cover layer and the adhesive layer are made of paper, resin, PET, and/or bio-sourced plastic material, in order to be biodegradable. Moreover, the flexible PCB is preferably configured to be recycled.

According to another aspect of the present invention, a method for producing a tracking device for satellite communication is provided, as set out in claim 14.

The method can be advantageously used to produce a tracking device as the ones described above.

Preferably, the method is carried out by a reel-to-reel process.

According to another aspect of the present invention, a method for operating a tracking device for satellite communication as the ones describes above is provided, as set out in claim 18.

### Brief description of the drawings

Illustrative embodiments of the present invention will be described in more detail in the following specification, while also referring to the accompanying drawings, in which
Fig. 1 schematically illustrates the operation of a device for satellite communication according to an embodiment of the present invention;
Fig. 2 schematically illustrates an exploded view of a device for satellite communication according to an embodiment of the present invention.

### Detailed description

In the following, the present invention is described with reference to particular embodiments, as illustrated in the enclosed figures. However, the present invention is not limited to the particular embodiments described in the following detailed description and shown in the figures. Instead, the described embodiments simply exemplify the different features of the present invention, the scope of which is defined in the claims. Further modifications and variations of the present invention will be clear to the skilled person.

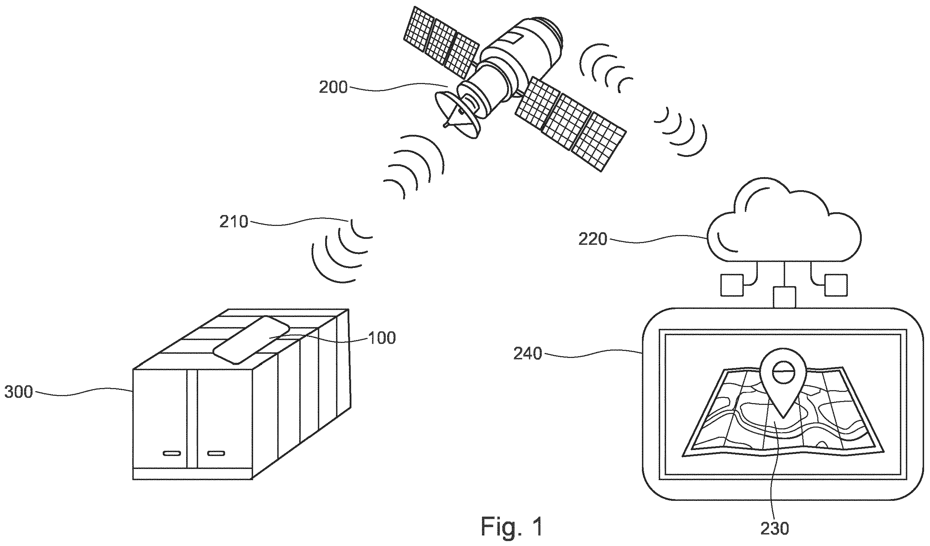

Fig. 1 schematically illustrates the operation of a tracking device for satellite communication 100 according to an embodiment of the present invention.

The tracking device for satellite communication 100 is attached to an object 300 to be tracked, such as a package, or a container. The tracking device for satellite communication 100 enables tracking the position of the object 300 and measuring environmental parameters in correspondence with the object 300, such as temperature, vibration, humidity, or the like. When a plurality of tracking devices for satellite communication 100 is applied to different objects 300, an inventory process is also possible.

After measuring the position and/or the environmental parameters of the object 300, a signal containing these data is transmitted to the satellite 200 via a simple network 210. The satellite 200 then transmits a communication signal to the internet cloud 220 and/or to local applications areas to display the position of the device 230 and travel parameters 240.

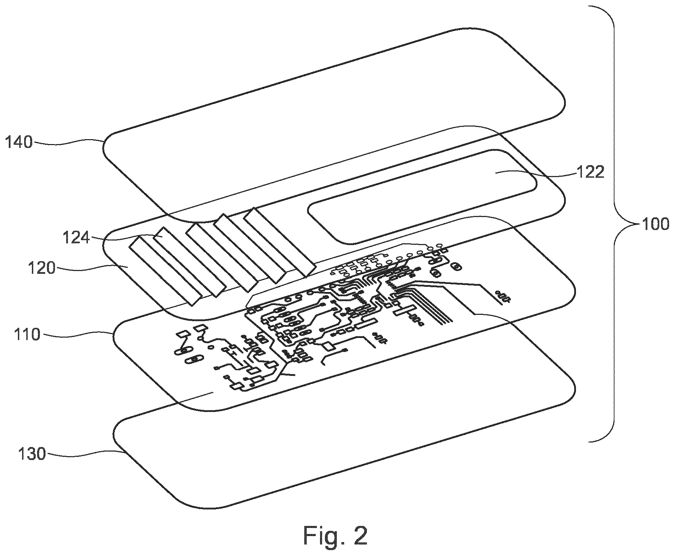

Fig. 2 schematically illustrates an exploded view of a tracking device for satellite communication 100 according to an embodiment of the present invention.

The tracking device for satellite communication 100 is a multi-layered structure and comprises, from top to bottom in the figure, a cover layer 140, a layer with the power control module 120, a flexible PCB layer 110, and an adhesive layer 130.

The flexible PCB layer 110 comprises a microcontroller, a communication module, a satellite antenna, and an RFID antenna for enabling communication with a satellite. Preferably, the flexible PCB layer 110 further comprises one or more sensors (not visible in Fig. 2) for measuring environment parameters, such as temperature, vibration, humidity, or the like.

The power control module 120 comprises an energy-storage module and an energy-harvesting module, the energy-harvesting module being configured to generate energy and provide it to the energy-storage module. In the illustrative configuration of Fig. 1, the power control module 120 comprises the battery 122 and the solar panel 124. However, the power control module 120 may comprise additional and/or alternative energy-harvesting modules based on vibration technology. Moreover, the power control module 120 may comprise additional and/or alternative energy-storage modules.

Preferably, the power control module 120 is attached to the flexible PCB layer 110 by means of flex connectors (not shown).

With reference to the configuration of Fig. 1, the cover layer 140 is attached to and protects the side of the power control module 120 opposite to the flexible PCB 110. The cover layer 140 may be advantageously provided with a window of transparent material (not shown) to enable the sunlight to reach the power control module 120, in order to provide energy to the energy-harvesting module, such as the solar panel 124. The cover layer 140 may be made of a paper or plastic material, such as a bio-based plastic material, so that it can be recycled. The cover layer 140 comprises a printed area with information directly linked to the end customer. The information can be personalized.

With continued reference to the configuration of Fig. 1, the adhesive layer 130 is attached to the side of the PCB layer 110 opposite to the power control module layer 120. The adhesive layer 130 comprises a sub-layer of paper or plastic material, and a sub-layer of glue and enables attachment of the device for satellite communication 100 to the object 300 to track. Due to the adhesive layer 130, the tracking device 100 can be reversibly attached to the object 300 to be tracked and can be re-used for different objects.

The tracking device 100 may further comprise additional compensation layers (not shown) between the flexible PCB 110, the power control module 120, the adhesive layer 130, and/or the cover layer 140, in order to compensate for different thicknesses of the layers due to the presence of the electronic components.

Even if the present invention has been described with reference to the embodiments described above, it is clear to the skilled person that it is possible to apply different modifications, variations and improvements of the present invention in light of the teachings described above and the field, and within the scope of the enclosed claims, without departing from the scope and purpose of the present invention.

Finally, those fields considered known to the skilled person have not been described to avoid covering in a useless way the described invention.

### REFERENCE NUMBERS

100: tracking device for satellite communication
110: flexible PCB
120: power control module
122: energy-storage module
124: energy-harvesting module
130: adhesive layer
140: cover layer
200: satellite
210: satellite network
220: cloud
230, 240: displayed data
300: object

## Claims

1. A tracking device for satellite communication (100) comprising:
- a flexible Printed Circuit Board "PCB" (110) configured to communicate with a satellite, the flexible PCB (110) comprising a microcontroller, a communication module, a satellite antenna, and an RFID antenna; and
- a power control module (120) configured to supply power to the flexible PCB (110),
wherein the power control module (120) comprises an energy-storage module (122) and an energy-harvesting module (124), the energy-harvesting module (124) being configured to generate energy and provide it to the energy-storage module (122).

2. The tracking device of claim 1, wherein the energy-storage module (122) comprises a battery and/or a storage capacitor.

3. The tracking device (100) of claim 1 or 2, wherein the energy-harvesting module (124) comprises a solar panel and/or a harvesting module based on vibration technology.

4. The tracking device (100) of any of previous claims, wherein the flexible PCB (110) further comprises one or more sensors for measuring temperature, vibration, and/or humidity.

5. The tracking device (100) of any of previous claims, wherein the microcontroller and/or the communication module are low power consumption components, preferably having a working current in Serial Line Internet Protocol (SLIP) mode equal to or less than 30 mA, even more preferably equal to or less than 25 mA, even more preferably equal to or less than 20 mA.

6. The tracking device (100) of any of previous claims, wherein the microcontroller and/or the communication module are low power consumption components, preferably having a working current in Programmable Interface Controller (PIC) mode equal to or less than 350 mA.

7. The tracking device (100) of any of previous claims, further comprising an adhesive layer (130) suitable for reversibly attaching the tracking device (100) to an object, for example an object to be tracked.

8. The tracking device (100) of claim 7, wherein the adhesive layer (130) comprises a sub-layer of paper or plastic material, such as bio-based plastic, and a sub-layer of glue.

9. The tracking device (100) of any of previous claims, further comprising a cover layer (140) attached to a side of the PCB (110).

10. The tracking device (100) of claim 9, wherein the energy-harvesting module (124) comprises a solar panel and the cover layer (140) is provided with a window of transparent material for enabling sunlight to reach the solar panel.

11. The tracking device (100) of any of previous claims having a thickness of less than 20 mm, preferably less than 10 mm, even more preferably less than 5 mm.

12. The tracking device (100) of any of previous claims, wherein the tracking device (100) is a layered-structure.

13. The tracking device (100) of any of previous claims, wherein the tracking device (100) is flexible, for example it is configured to be bent up to 60°.

14. A method for producing a tracking device for satellite communication, the method comprising the following steps:
a) Providing a flexible PCB (110) with a microcontroller, a communication module, a satellite antenna, and an RFID antenna;
b) Attaching a layer with a power control module (120) to a side of the flexible PCB (110), the power control module (120) being configured to supply power to the flexible PCB (110),
wherein the power control module (120) comprises an energy-storage module (122) and an energy-harvesting module (124), the energy-harvesting module (124) being configured to generate energy and provide it to the energy-storage module (122).

15. The method of claim 14, further comprising the following step:
c) Attaching an adhesive layer (130) to the side of the flexible PCB (110) opposite to the layer with the power control module (120) to enable attachment of the tracking device (100) to an object (300).

16. The method of claim 14 or 15, further comprising the following step:
d) Attaching a cover layer (140) to the side of the power control module (120) opposite to the flexible PCB (110).

17. The method of any of claims 14 to 16, wherein the method is carried out by a reel-to-reel process.

18. A method for operating the tracking device for satellite communication (100) of any of claims 1 to 13, the method comprising the following steps:
i) Attaching the tracking device for satellite communication (100) to an object (300) to be tracked, such as a package, or a container;
ii) Measuring the position of the object (300) and, optionally, the environmental parameters of the object (300);
iii) Transmitting a signal containing the data of the object position and, optionally, of the environmental parameters to a satellite (200) via a network (210);
iv) Transmitting a communication signal from the satellite (200) to the internet cloud (220) and/or to local applications areas to display said data.
